(19) Europäisches Patentamt
European Patent Office
Office européen des brevets

(11) EP 1 491 860 A2

(12) EUROPEAN PATENT APPLICATION

(43) Date of publication:
**29.12.2004 Bulletin 2004/53**

(51) Int Cl.[7]: **G01C 21/36**

(21) Application number: **04014714.2**

(22) Date of filing: **23.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **24.06.2003 JP 2003180146**

(71) Applicant: **AISIN AW CO., LTD.**
**Anjo-shi Aichi 444-1192 (JP)**

(72) Inventors:
- **Kano, Toshihiro**
  **Okazaki-shi Aichi 444-8564 (JP)**
- **Yamada, Kunihiro**
  **Okazaki-shi Aichi 444-8564 (JP)**
- **Ogawa, Satoshi**
  **Okazaki-shi Aichi 444-8564 (JP)**

(74) Representative: **Kramer - Barske - Schmidtchen**
**European Patent Attorneys**
**Patenta**
**Radeckestrasse 43**
**81245 München (DE)**

# (54) Navigation system, location search method and computer program therefor

(57) A navigation apparatus (14) includes a current position detector (15) that detects a current position and at least one controller (17). The at least one controller determines the administrative district where the current position is located, searches for at least one facility within each of a plurality of administrative districts that are substantially adjacent to the administrative district where the current position is located, and assigns each adjacent administrative district to a selection area (fj) on a search screen based on the direction from the current position to each facility within the plurality of adjacent administrative districts. A touch screen having buttons (k1-9; k11-19) may be formed to represent the positional relationships between the current position and the adjacent administrative districts and enable the user to easily input commands for searching desired destination locations.

FIG. 7

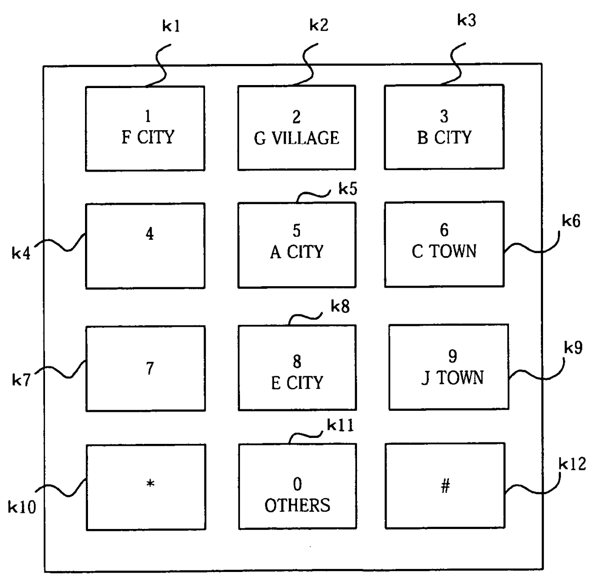




Printed by Jouve, 75001 PARIS (FR)

## Description

The present invention relates to a navigation system, a method for implementing a location search and a computer program for implementing this method.

In known vehicle navigation apparatus, the current position of the vehicle is detected by, for example, a global positioning system (GPS). The moving direction of the vehicle is determined by detecting the turning angle of the vehicle using a gyroscopic sensor. Furthermore, map data is read from a data storage unit, and a map showing the nearby area in which the vehicle is located is displayed on a display screen. On the map, the current position and the moving direction of the vehicle are also displayed. A user or a driver can thus navigate the vehicle in accordance with the current position, the moving direction of the vehicle, and the map displayed on the map screen.

If the user sets (inputs) a destination and specifies a searching condition, a route from the current position to the destination is searched in accordance with the specified search parameters. The route resulting from the search is displayed together with the current position and the destination on a route display screen of the display. Thus, the driver can navigate the vehicle in accordance with the route displayed on the screen. When a location different from the current position is specified as the starting point by the driver, a route from the specified starting point to the destination is searched.

When a destination is set or a particular location is registered in a memory, the user can search for a desired location by specifying (inputting) an address. To this end, a searching screen is displayed on the display of the vehicle navigation apparatus, and addresses are displayed in the form of a list on the searching screen (refer to, for example, Japanese Unexamined Patent Application Publication No. 9-292831).

If the driver selects one of the addresses from the list by utilizing an operation control unit of the navigation system, the location corresponding to the selected address is searched. The driver may also specify a desired address by inputting letters, numbers and/or characters that represent the address. In that case, the location corresponding to the specified address is searched.

In the known vehicle navigation apparatus described above, information representing the relative positional relationship between the current position and a searched location is not displayed for the user to view, and the lack of such information increases the difficulty in searching for the location.

It is an object of the present invention to provide improved navigation systems, searching methods and computer programs for implementing such searching methods that, e.g., display the positional relationship of the current position (or another selected position) to a desired destination location in order to provide more useful information concerning routes therebetween. This object is achieved by the inventions recited in the appended claims.

The various exemplary embodiments of present teachings provide a navigation system, a location search method and location search program capable of easily searching for a location using an address by at least providing (e.g., displaying) to the user the relative positional relationship between the desired destination location and the inputted address.

Various exemplary embodiments of the present teachings also provide a navigation system, which includes a current position detector adapted to detect a current position (location) of the navigation system and at least one controller coupled to the current position detector. The at least one controller preferably (i) determines in which administrative district the navigation system is currently located, (ii) searches for at least one facility (e.g., a landmark building) located in each of a plurality of administrative districts that are substantially adjacent to the administrative district where navigation system is currently located, and (iii) assigns each of the plurality of adjacent administrative districts to a selection area on a search screen based on the direction from the current position (location) of the navigation system to the respective facilities that were identified within the plurality of adjacent administrative districts.

Various exemplary embodiments of the present teachings also provide a method for searching for a location, including (i) determining the current position (location) of the navigation system, (ii) searching for at least one facility located in each of a plurality of administrative districts that are substantially adjacent to the administrative district where the navigation system is currently located, and (iii) assigning each of the plurality of adjacent administrative districts to a selection area on a search screen based on the direction from the current position (location) of the navigation system to the respective facilities that were identified within the plurality of adjacent administrative districts.

Exemplary embodiments of the invention will now be described with reference to the accompanying drawings, wherein:

Fig. 1 is a diagram showing a navigation system according to a first exemplary embodiment;

Fig. 2 is a flow chart showing a searching operation according to the first exemplary embodiment;

Fig. 3 is a first diagram showing an example of a search screen used in a wide-area search according to the first exemplary embodiment;

Fig. 4 is a second diagram showing an example of a search screen used in a wide-area search according to the first exemplary embodiment;

Fig. 5 is a third diagram showing an example of a search screen used in a wide-area search according to the first exemplary embodiment;

Fig. 6 is a conceptual diagram showing locations of cities, towns, and villages, according to the first exemplary embodiment;

Fig. 7 is a diagram showing an example of a search screen used in a narrow-area search according to the first exemplary embodiment;

Fig. 8 is a diagram showing a button assignment process according to the first exemplary embodiment;

Fig. 9 is a flow chart showing a searching operation according to a second exemplary embodiment;

Fig. 10 is a conceptual diagram showing locations of cities, towns, and villages, according to the second exemplary embodiment;

Fig. 11 is a first diagram showing a button assignment process according to the second exemplary embodiment;

Fig. 12 is a diagram showing an example of a search screen used in a small-area search according to the second exemplary embodiment; and

Fig. 13 is a second diagram showing a button assignment process according to the second exemplary embodiment.

Referring to Fig. 1, an information terminal 14, such as a vehicle navigation apparatus, may be installed on a vehicle. The vehicle navigation apparatus 14 may include:

a GPS sensor 15 serving as a current position detector for detecting the current position of the navigation apparatus,
a data storage unit 16 serving as an information storage unit for storing navigation information such as map data, road data, and search data that are basic information used in the vehicle navigation apparatus 14 and
various kinds of additional information.

The navigation apparatus 14 may also include a navigation processing unit 17, which may comprise a computer or processor that operates in accordance with programs and data for performing various operations, including navigation processing, in accordance with input information. A direction sensor 18 may serve as a direction detector for detecting the (moving) direction of the vehicle.

The navigation apparatus 14 preferably may include one or more of:

an operation control unit 34 serving as a first input unit for use by an operator or a driver to input commands and/or data,
a display 35 serving as a first output unit for displaying various kinds of information in the form of images on a screen (not shown),
an audio input unit 36 serving as a second input unit for inputting audible commands and/or data,
an audio output unit 37 serving as a second output unit for outputting audible information, for example, in the form of a voice informing the driver of navigation information, and
a communication unit 38 serving as a communication unit that can include a transmitter/receiver, all of which may be connected to the navigation processing unit 17.

A vehicle speed sensor 41 serving as a vehicle speed detector may also be connected with the navigation processing unit 17.

The GPS sensor 15 receives radio signals transmitted from satellites and calculates the current position on the ground based upon the received radio signals. The GPS sensor 15 can also detect a current time from the received radio signals.

Although the GPS sensor 15 may be used as a current position detector according to the present teachings, one or more of a distance sensor, a steering sensor, and/or an altimeter also may be used as a current position detector. The distance sensor detects the distance between two points on a road based on the rotational speed of the vehicle wheels (not shown) or a value obtained by twice integrating the vehicle acceleration/deceleration. The steering sensor detects the steering angle by using, for example, an optical rotation sensor (not shown) disposed on a rotating part of a steering wheel, a rotational resistance sensor, or an angle sensor disposed on a vehicle wheel.

A gyroscopic sensor or a geomagnetic sensor may be used as the direction sensor 18. Gyroscopic sensors detect the direction of the vehicle by integrating the angle of traverse. For example, a gas rate gyroscope or a vibrating gyroscope may be used as the gyroscopic sensor. Geomagnetic sensors detect the direction of the vehicle by detecting changes in geomagnetism.

The data storage unit 16 preferably stores a database that may include one or more data files, such as a map data file, an intersection data file, a node data file, a road data file, a route search data file, a facility information data file, and/or a location search data file. In each of those data files, data used in outputting various images to the display 35 is stored. In the data storage unit 16, data used in outputting information via the audio output unit 37 is also stored.

Map data used to display a map is stored in the map data file. Intersection data associated with intersections is stored in the intersection data file. Node data associated with nodes is stored in the node data file. Road data associated with roads is stored in the road data file. Route search data used in searching for a route is stored in the route search data file. Facility information data associated with facilities is stored in the facility information data file. Location search data used in searching for locations is stored in the location search data file. The intersection data, the node data, the road data, and the route search data represent road status data.

The intersection data may include one or more types of data representing intersection names, intersection shapes, facilities located adjacent to an intersection, and/or names of places close to intersections. The node data includes data indicating actual branch points (including intersections and T junctions), nodes, and links between adjacent nodes of roads.

The road data may include one or more types of data representing:

road structures such as width, gradient, cant, bank, road surface state,
the number of lanes,
locations at which the number of lanes increases or decreases,
locations at which the road width increases or decreases,
corner data representing curvature radii, intersections, T junctions, and corner entrances,
road attribute data representing whether a road of interest is a downhill road or an uphill road,
road type data that identifies roads, e.g., as general roads (national road, prefectural road, narrow street, etc.), expressways, urban expressways, and toll roads.

The road data also may preferably include one or more types of data representing railroad crossings, expressway entrance/exit rampways, and tollgates of expressways or toll roads. The facility information data may include one or more types of data representing names, addresses, telephone numbers, and other information concerning facilities such as hotels, gas stations, parking lots resorts, department stores, etc.

The navigation processing unit 17 can include one or more of:

a CPU 31 serving as a processor or a controller responsible for control over the entire vehicle navigation apparatus 14,
a RAM 32 serving as a storage medium, such as, for example, a DRAM, SRAM, MRAM, or FRAM, which is used as a working memory during processing performed by the CPU 31,
a ROM 33 serving as a storage medium for storing one or more control programs and other programs such as a route search program and a route guidance program, and
a flash memory (not shown) that may serve as a storage medium for storing various kinds of data and programs.

Semiconductor memories or magnetic cores may also be used as internal storage devices such as the RAM 32, the ROM 33, and the flash memory.

An MPU may be used instead of the CPU 31 serving as the processor or the controller.

The data storage unit 16 for storing various kinds of data can include one or more of an external storage device, a magnetic disk such as a hard disk or a flexible disk used as a storage medium (not shown), and a read/write head (not shown) for reading/writing data. Representative storage medium for the external storage device, which may be used as the data storage unit 16, include magnetic tape, a magnetic drum, a CD, an MD, a DVD, an optical disk, an MO, an IC card, and/or an optical card.

Instead of storing programs in the ROM 33 and storing data in the data storage unit 16, the programs and data may be stored on the hard disk or a similar storage medium. In this case, the programs and the data may be read from the hard disk device into the flash memory. It is possible to update the program and/or the data by exchanging the hard disk or similar storage medium. If an automatic transmission controller for controlling an automatic transmission (not shown) is installed in the vehicle, programs and data used to control the automatic transmission may also be stored on the hard disk or similar storage medium. The program and/or the data may be received via the communication unit 38 and may be stored in the flash memory.

The operation control unit 34 may be used by a user, for example, to input data to the CPU for the purpose of changing the current position from which to start driving, inputting a start point and a destination point, inputting a waypoint, and/or controlling the communication unit 38. The operation control unit 34 may include one or more of a keyboard, a mouse, a bar code reader, a light pen, a remote controller, or a joy stick, which is disposed separately from the display 35. The operation control unit 34 may include various keys, switches, and/or buttons in the form of virtual keys displayed on a touch screen of the display 35 so that commands and/or data can be input by touching or clicking on those virtual keys.

Representative displays 35 that may be utilized with the present teachings include a CRT display, a liquid crystal display, or a plasma display. Alternatively, the display 35 may include a holographic device for forming an image by projecting a holographic image onto the front window glass of the vehicle. It is possible to display various kinds of information on the screen of the display 35, such as the current position, a map, a route selected by searching, navigation information along the selected route, and/or traffic information. A photograph or a simplified diagram may also be displayed on the screen of the display 35 to indicate a feature of an intersection or a route, the distance to a next intersection, the traffic structure of the next intersection, and/or other associated information. Furthermore, information indicating how to use the virtual keys, the operation control unit 34, and/or the audio input unit 36, operation menus, information indicating what keys are available, and/or a FM multiplex broadcast program table may also be displayed.

The audio input unit 36 may include a microphone or a similar means for audibly inputting (not shown) necessary information, commands and/or data. The audio output unit 37 may include a voice synthesizer and a speaker (not shown) whereby a synthesized voice may audibly communicate various kinds of information, such as route navigation information, guidance information, and traffic information, from the audio output unit 37. Instead of or in addition to voices synthesized by the voice synthesizer, various other sounds and/or voices indicating various kinds of information may be stored in a memory or a magnetic storage device, such as a magnetic tape storage device, and may be audibly output by the audio output unit 37.

The communication unit 38 may include a beacon receiver for receiving various kinds of information or data transmitted in the form of radio beacon signals or light beacon signals from an information provider, such as VICS® (the Vehicle Information and Communication System), via radio beacon transmitters or light beacon transmitters disposed along roads. The communication unit 38 may also include a FM receiver for receiving various kinds of information transmitted in the form of FM multiplex broadcasting by FM broadcast stations. For example, the beacon receiver may be used to receive traffic information, such as road congestion information, traffic restriction information, parking lot information, traffic accident information, and/or service area congestion information. The FM receiver may be used to receive, in addition to the traffic information described above, general information such as news and weather forecasts via FM multiplex broadcasting. Although in the present exemplary embodiment, the beacon receiver and the FM receiver are integrated in the VICS receiver, they may also be disposed separately.

The communication unit 38 is also preferably capable of receiving various other kinds of data from particular base stations, such as D-GPS information used to determine a detection error of the GPS sensor 15. Furthermore, the communication unit 38 is preferably capable of receiving position information via a radio beacon or a light beacon for use in detecting the current position. In this case, the beacon receiver can also serve as the current position detector.

The communication unit 38 is preferably capable of receiving various kinds of information such as traffic information and other general information from the information center 51, which may serve as an information provider. To this end, the communication unit 38 may be connected to the information center 51 via a network 43.

The vehicle navigation apparatus 14, the information center 51, and the network 43 form a navigation system in which various kinds of information may be transmitted between the communication unit 38 and a communication unit (not shown) of the information center 51.

In the present exemplary embodiment, in order to enable communications by the communication unit 38, a communication device such as, for example, a portable telephone module may be disposed in the communication unit 38. Alternatively, a communication device may be disposed separately from the communication unit 38 and the communication device may be connected with the communication unit 38. In this case, a mobile telephone such as a cellular telephone, a car telephone, or a PHS telephone, or a wireless LAN card may be used as the communication device. A personal computer, a portable computer, a personal digital assistance (PDA) device, an electronic notepad, a video telephone, a game machine or a similar device possessing communication capability may also be used as the communication device.

Representative networks 43 include communication networks such as, for example, a LAN (Local Area Network), a WAN (Wide Area Network), an intranet, a portable telephone network, a telephone network, a public communication network, a private communication network, or the Internet. A communication line using a communication system such as CS broadcasting or BS broadcasting using a satellite, terrestrial digital broadcasting, or FM multiplex broadcasting, or a communication line using a non-stop automatic toll collection system (ETC, Electronic Toll Collection system) used in an intelligent traffic system (ITS) or a dedicated short range communication (DSRC) system may also be used as the network 43.

The information center 51 may be operated by an individual, a company, an organization, a local government, or a government-affiliated organization. For example, the information center 51 may be operated by VICS® .

The information center 51 can include a server 53, a database (DB) 57 serving as an information storage unit connected with the server 53, and the communication unit. The communication unit allows two-way communication between the information center 51 and the vehicle navigation apparatus 14 whereby traffic information and general information are supplied. To this end, the server 53 includes a CPU 54 serving as a processor or a controller, a RAM 55, and ROM 56, which embody a computer that operates in accordance with a specific program and data. Various kinds of data (including navigation information) similar to the data stored in the data storage unit 16 may be stored in the database 57. The computer may be embodied by the server 53 and the navigation processing unit 17. Instead of the CPU 54, a MPU may be used.

If information such as traffic information or general information is received from the road traffic information center, the CPU 54 can directly store the received information as raw information in the database 57 or can store the information as secondary information in the database 57 after performing statistical processing on the information to produce statistical data. Such statistical data can include history information indicating the history of traffic congestion or predicted traffic congestion information. In the present exemplary embodiment, when the statistical data is produced, the history information may be processed according to detailed conditions in terms of the date/time, days of the week, weather, events, seasons, and/or facility information (indicating whether there is a large-scale facility such as a department store or a super market).

Representative methods for operating the above-described navigation systems will now be described.

When a user activates the vehicle navigation apparatus 14, e.g., by inputting a command or data via the operation control unit 34, the CPU 31 initializes various data and reads data representing the current position detected by the GPS sensor 15 and the vehicle (moving) direction detected by the direction sensor 18. The CPU 31 optionally may include a matching processing unit (not shown) that performs matching processing based on the trajectory of the current position obtained from the stored data and the shapes and locations of road links of nearby roads. In addition, the matching processing unit may detect the road link closest to the current position of the navigation apparatus 14, thereby identifying the current position thereof.

The CPU 31 also acquires navigation information by reading it from the data storage unit 16 or by receiving it from the information center 51 via the communication unit 38. If the navigation information is acquired from the information center 51, the CPU 31 downloads navigation information into the flash memory or the hard disk. When navigation information is acquired via the communication unit 38, programs may also be acquired in addition to the navigation information.

The CPU 31 then forms a map screen on the display 35 and displays the current position, a map of the nearby area around the current position, and the direction of the vehicle on the map screen. A driver can navigate the vehicle in accordance with this information.

The vehicle navigation apparatus 14 or the navigation system may be used to search for a route, as described below. In the following discussion, it is repeatedly stated that the CPU 31 "performs" a "process." It is to be understood that these statements also mean that the CPU 31 executes a computer program that includes instructions for performing the particular process or method or algorithm.

If a user inputs a destination by inputting a command and/or data via the operation control unit 34, the CPU 31 performs (executes) a destination setting (selecting/inputting) process (program) to set (select/input) the destination. If necessary, a start point (or start location) may be input and set. One or more points (locations), such as the driver's home, may also be registered in advance, and the start point may be selected from the registered points.

After the destination is set, the CPU 31 performs a route search process. The CPU 31 reads the data representing the current position and the desired destination location and also reads search data from the data storage unit 16. The CPU 31 searches for a route from the start point (e.g., the current position) to the destination based upon the current position, the destination, and the search data and then outputs search data representing the determined (recommended) route.

Thereafter, the CPU 31 performs a guidance process. For example, the CPU 31 provides route guidance information along the route to the driver. To this end, the CPU 31 reads the route data and displays the route on the map screen in accordance with the route data.

If necessary, the CPU 31 performs an audio output process. For example, the CPU 31 may output audio signals representing navigation information associated with the route to the audio output unit 37, which converts the audio signals into audible sounds.

When a destination is set or a particular location is registered in the memory, the driver/user may search for a desired location using an address, as described below. To this end, the CPU 31 performs a search process to search for a particular location in accordance with an address input by the driver/user via the operation control unit 34.

The operation of a preferred search means is described in further detail with reference to Figs. 2-8, which were briefly described above.

First, the user inputs a command using the operation control unit 34 (Fig. 1), e.g. by touching a location search key on the initial screen of the display 35, in order to start searching for a location by using an address. In response, the CPU 31 performs a search screen display process. For example, the CPU 31 forms a large-area search screen di (i = 1, 2,...), such as the various screens shown in Figs. 3 to 5, on the display 35, in accordance with the data stored in the search data file. The search screen di is used by the user/driver to select a relatively small administrative district, a relatively large administrative district such as Tokyo, Hokkaido, Osaka-fu, Kyoto-fu, or a prefecture (hereinafter generically referred to as a prefecture). The search screen di includes a plurality of rectangular-shaped selection areas fj (j = 1, 2, ...) arranged in the form of a matrix array (a 3 × 3 matrix array in this specific example). In the initial state, the name of the prefecture in which the vehicle is currently located is displayed in the center selection area fj (i.e., the selection area f5 in this specific embodiment). The names of the prefectures that are adjacent to the prefecture in which the vehicle is currently located are displayed in surrounding selection areas fj (i.e., the selections areas f1 to f4 and f6 to f9 in this specific embodiment). For this purpose, data used to identify the prefecture names in the respective selection areas fj may be stored as search data in the search data file.

Herein, the prefecture in which the vehicle is currently located may also be referred to as the "currently-located large administrative district," and the prefectures adjacent to the prefecture in which the vehicle is currently located may also be referred to as "adjacent large administrative districts."

In the present exemplary embodiment, each respective selection area fj is disposed at a location corresponding to the location of the prefecture on a map. As a result, the displayed location relationship between the various selection areas fj, as shown on the search screen di, will be substantially similar to the relationship in terms of the actual physical location of the prefectures. When no prefecture is adjacent to a prefecture in a particular direction, e.g., the prefecture borders a body of water such as a sea or ocean in that particular direction, no prefecture name is displayed in the corresponding selection area fj.

When the user touches the search screen di at a particular selection area fj to select the prefecture whose name is displayed in that selection area fj, the CPU 31 performs a large-area search process to set the selected prefecture as a selected large area.

The search screen di is preferably capable of being scrolled by using a scroll key (not shown). In this case, if the search screen d1 is scrolled to the right, search screen d2 appears. If the search screen d1 is scrolled down, search screen d5 appears. That is, the names of the prefectures displayed in the respective selection areas preferably change in response to scrolling.

The CPU 31 then determines whether the prefecture in which the vehicle is currently located has been selected (step S1). If it is determined that the prefecture in which the vehicle is currently located has not been selected (S1 = NO), a screen for use in inputting letters, numbers and/or characters is formed on the display 35. In response, the user specifies a large administrative district and/or a small administrate district by inputting characters representing a city, a town, and/or a village (step S8).

If the prefecture in which the vehicle is currently located is selected (S1 = YES), the CPU 31 performs an administrative district detection process to identify the city, town, or village ("A city," in this specific example) in which the vehicle is currently located (step S2). Subsequently, the CPU 31 performs a specific facility search process. For example, the CPU 31 reads facility data and data indicating the current position, and then searches for specific facilities or landmarks that are located in areas adjacent to (near) the current position and that are useful to identify cities, towns, and/or villages (step S3). In the present embodiment, "specific facilities" may include, e.g., administrative institutional offices (e.g., prefectural government offices, city government offices, town government offices, village government offices, etc.). In this case, the search for specific facilities is performed based upon the coordinates of the current location and coordinates of the facilities. For example, the ten specific facilities that are closest in linear distance to the current position are preferably selected and then sorted in the order of increasing linear distance.

Representative specific facilities or landmarks preferably include facilities or landmarks that can be found without difficulty in the respective cities, towns, and/or villages (e.g., B city, C town, D city, E city, F city, G village, H village, I town, J town, and K town, in this specific example) that are adjacent to the city, town, or village in which the vehicle is currently located (hereinafter, "adjacent cities, town, and/or villages") and that are preferably located in central areas of the respective adjacent cities, towns, and/or villages. The number of such specific facilities located in each city, town, or village is preferably as few as possible, although at least one specific facility or landmark should be present in the facility data for each city, town, or village. In view of the above circumstances, administrative institution offices (denoted by open circles in Fig. 6) are preferably selected as the specific facilities. However, gas stations, convenience stores, boundaries on main roads between cities, towns, or villages or other landmarks also may be utilized according to the present teachings as the specific facilities instead of (or in addition to) the administrative institution offices. Naturally, if many such non-administrative specific facilities are included in the facility data, the processing time and cost of computation performed by the CPU 31 will increase. Therefore, the designer may variously select the amount of facility data to include based upon system performance requirements.

Subsequently, the CPU 31 performs a specific facility selection process. For example, in step S4, certain data are deleted (or ignored in the further processing steps), which data represents administrative institution offices of the detected administrative institution offices, for example, an administrative institution office (prefectural government office) of the prefecture in which the vehicle is currently located, an administrative institution office (a city government office, a town government office, or a village government office) of the city, town, or village in which the vehicle is currently located, and/or other administrative institution offices in prefectures (prefectural government offices, city government offices, town government offices, and/or village government offices). However, no administrative institution offices are deleted in this specific example. As a result, the CPU 31 selects for further processing the remaining administrative institution offices located in adjacent cities, towns, and/or villages (i.e., the administrative institution offices that have not been deleted or marked to be ignored in the further processing).

Thereafter, the CPU 31 performs a specific facility evaluation process based upon the coordinates of the current position and the coordinates of the respective remaining (selected) administrative institution offices. As a result, the "search cost" of each particular route from the current position to the respective selected administrative institution offices is calculated (step S5). Each administrative institution office is evaluated by using the calculated search cost as an evaluation measure. For example, the CPU 31 preferably reads the search data and determines routes from the current position to each of the administrative institution offices. Thereafter, the CPU 31 calculates the "cost" for each route on the basis of one or more predetermined cost conditions (in the present embodiment, the distance between the current position and the respective facilities is utilized as the predetermined cost condition), and then employs the calculated cost as the "search cost" in the further processing.

Next, the CPU 31 performs a button assignment process (or selection area assignment process), in which buttons k1 to k12 are displayed on the small-area search screen in a manner similar to telephone push buttons (i.e., using the numerals and characters "1" to "9", "*", "0", and "#"), as shown in Fig. 7. Buttons k1 to k9 are assigned as selection areas for selecting cities, towns, and/or villages on the basis of the calculated search costs of the respective routes to the plurality of selected administrative institution office (step S6), as will be further discussed below.

For example, the CPU 31 also preferably perform an order determination process in which cities, towns, and/or villages corresponding to the ten selected administrative institution offices are sorted in the order of decreasing evaluation scores, which were obtained in the evaluation process, starting from the highest evaluation score, as shown in Fig. 8 (in this specific example, cities, towns, and villages have been sorted according to the order of E city, C town, B city, J town, D city, G village, F city, I town, K town, and H village).

Thereafter, the CPU 31 performs a direction calculation process. For example, the direction $\alpha i$ (i = 1,2,... 10) from the current position to each selected administrative institution office is calculated using the coordinates of the current position and the coordinates of each selected administrative institution office. In this process, the direction $\alpha i$ is expressed as an angle measured in the clockwise direction with respect to due north. In this specific example, the directions $\alpha i$ of E city, C town, B city, J town, D city, G village, F city, I town, K town, and H village (from the current position) are respectively calculated as 182, 91, 43, 87, 130, 30, 300, 88, 120, and 58 (in units of angular degrees).

According to the present exemplary embodiment shown in Fig. 7, the centrally-located button k5 is assigned to represent the city, town, or village in which the vehicle is currently located, and the eight surrounding buttons k1 to k4 and k6 to k9 are assigned to represent adjacent cities, towns, and/or villages. The surrounding buttons k1 to k4 and k6 to k9 are each assigned an angle $\beta i$ (i = 1, 2,..., 10) 0, 45, 90, 135, 180, 225, 270, and 315 (in units of angular degrees) that indicates the positions of the respective buttons k1 to k4 and k6 to k9 with respect to the center button k5, wherein each direction $\beta i$ is expressed as an angle measured in the clockwise direction with respect to due north. In other words, as shown in Fig. 7, button k11 is assigned the angle 0, which represents the northern direction from the current position. Button k6 is assigned the angle 90, which represents the eastern direction from the current position. Button k8 is assigned the angle 180, which represents the southern direction from the current position. Finally, button k4 is assigned the angle 270, which represents the western direction from the current position.

Using these assigned angles for the respective buttons k1 to k4 and k6 to k9, the CPU 31 then performs an assignment process in order to determine which assigned angle $\beta i$ is closest to the angle $\alpha i$ calculated in the angle calculation process for the selected adjacent cities, towns and villages, and each respective button is assigned to the particular city, town or village having the angle $\alpha i$ that is closest to the angle $\beta i$ assigned to that button. However, if any button has already been assigned a city, town or village, the same button (assigned angle $\beta i$) is not used again. Instead, the button having the assigned angle $\beta i$ that is next closest to a next calculated direction $\alpha i$ is selected from the remaining buttons (assigned angles $\beta i$). An example of this assignment process will now be provided.

An assignment means (e.g., CPU 31) first calculates the absolute angle difference $\Delta\gamma i$ (i = 1, 2,... 10) between the direction $\alpha i$ and the assigned angle $\beta i$ according to the following equation (1):

$$\Delta\gamma i = |\alpha i - \beta i| \quad (1)$$

If this angle difference $\Delta\gamma i$ is equal to or greater than a threshold value $\gamma th$ (for example, 90°), the assigned angle $\beta i$ is not utilized and no button is assigned to that particular city, town or village.

For example, as shown in Fig. 8, the angle (direction) $\alpha 1$ of E city is 182° with respect to the current position (i.e., E city is substantially south of the current position). Thus, the assigned angle $\beta 1$ of 180° is closest to the angle of 182° and button k8 is assigned to represent E city. Similarly, the angle (direction) $\alpha 2$ of C town is 91°, and thus the assigned angle $\beta 2$ of 90° is closest to the angle of 91 °. Consequently, button k6 is assigned to represent C town. Further, the angle $\alpha 3$ of B city is 43°, the assigned angle $\beta 3$ of 45° is closest to the angle of 43°, and button k3 is assigned to represent B city. Moreover, the angle $\alpha 4$ of J town is 87°, the assigned angle $\beta 4$ of 135° is the closest of the remaining (i.e., as yet, un-selected) assigned angles $\beta i$ (buttons) assigned to the angle of 87° and button k9 is assigned to represent J town. In this case, even though the assigned angle $\beta 2$ of 90° (i.e., button k6) is closer to the angle of 87° than the assigned angle of $\beta 4$ of 135° (i.e., button k9), the assigned angle $\beta 2$ of 90° has already been used for C town. Thus, the assigned angle $\beta 4$ of 135° is the closest of the remaining assigned angles to the angle of 87° and button k9 is utilized to represent J town.

The angle $\alpha 5$ ofD city is 130°, but the closest assigned angles $\beta i$ (buttons) have already been allocated to other cities. Thus, the remaining assigned angle $\beta 5$ of 225° is closest to the angle of 130°. However, in this case, the angle difference $\Delta\gamma5$ =|130 - 225|= 95°, which is greater than the threshold value $\gamma th$. Therefore, the assigned angle $\beta5$ is not utilized, and no button representing D city is assigned. However, the angle $\alpha6$ of G village is 30°, and thus the assigned angle $\beta6$ of 0° is closest to the angle of 30°, which assigned angle (button) has not yet been utilized. Therefore, button k2 is assigned to represent G village.

The angle $\alpha7$ of F city is 300°, the assigned angle $\beta7$ of 315° is closest to the angle of 300° and button k1 is assigned to represent F city. The angle $\alpha8$ of I town is 88°, and thus the assigned angle $\beta8$ of 225° is the closest of the remaining assigned angles to the angle of 88°. However, in this case, the angle difference $\Delta\gamma8$ = |88 - 225| = 137°, which is greater than the threshold value $\gamma th$. Therefore, the assigned angle $\beta8$ is not utilized, and no button for representing D city is assigned.

The angle $\alpha9$ of K town is 120°, and thus the remaining assigned angle $\beta9$ of 225° is closest to the angle of 120°. However, in this case, the angle difference $\Delta\gamma9$ = |120 - 225 |= 105°, which is again greater than the threshold value $\gamma th$. Therefore, the assigned angle $\beta9$ is not utilized, and no button for representing K town is assigned. The angle $\alpha$ 10 of H village is 58°, and thus the remaining assigned angle $\beta10$ of 270° is closest to the angle of 58°. However, in this case, the angle difference $\Delta\gamma10$ = 360 - (|270 - 58|) = 148°, which is again greater than the threshold value $\gamma th$. Therefore, the assigned angle $\beta10$ is not utilized, and no button for representing H village is assigned. Note that when the angle difference according to equation (1) is greater than 180°, the conjugate angle (360° - the angle difference) is used. Also note that the sea (body of water) shown in Fig. 6 has been assigned buttons k4 and k7.

When the assignment of buttons to the respective cities, towns, and/or villages is completed, the CPU 31 forms a small-area search screen on the display 35 as shown in Fig. 7 (step S7).

In this state, the user can select one of cities, towns, and/or villages whose name is displayed on corresponding buttons k1 to k9, by touching one of buttons k1 to k9 displayed on the search screen. If one of the cities, towns, and/or villages is selected, the CPU 31 performs a small-area search process to set the city, town, or village, which was selected in the previous process, as the selected small area. If a remote controller is used as the operation control unit 34, one of cities, towns, and/or villages whose name is displayed on corresponding buttons k1 to k9 may be selected by pressing an arrow key or a numeric key of the remote controller.

As described above, buttons k1 to k9 on the search screen are assigned to cities, towns, and/or villages such that the positional relationship among buttons k1 to k9 is similar to the actual positional relationship between the city, town, or village in which the vehicle is currently located and its adjacent cities, towns, and/or villages. Thus, the driver can easily recognize the positional relationship between the current position and a searched destination location by viewing the small-area search screen shown in Fig. 7. This makes it possible to easily search for a location using an address.

Furthermore, because buttons k1 to k9 for selecting a city, a town, or a village are laid out on the search screen in a similar manner to the manner in which telephone push buttons are laid out, it becomes possible to easily input commands and data via the display 35 and the operation control unit 34.

A second embodiment of the present invention is described below with reference to Figs. 9-13, which were briefly described above.

When the user touches a particular selection area fj on the search screen di shown in Figs. 3 to 5 in order to select the prefecture whose name is displayed in that selection area fj, the CPU 31 performs a large-area search process to set the selected prefecture as the selected large area.

Referring to Figure 9, the CPU 31 then determines whether the prefecture in which the vehicle is currently located has been selected (step S11). If it is determined that the prefecture in which the vehicle is currently located has not been selected (S11 = NO), a screen for inputting characters is formed on the display 35. Thereafter, the user can specify a large administrative district and/or a small administrate district by inputting characters that represent a city, a town, and/or a village (step S20).

On the other hand, if the prefecture in which the vehicle is currently located has been selected (S11 = YES), the CPU 31 then performs an administrative district detection process to determine the city, town, or village ("A city," in this specific example) in which the vehicle is currently located. Subsequently, the CPU 31 performs an adjacent administrative district detection process, in which map data is read and adjacent cities, towns, and/or villages (B city, C town, D city, E city, F city, G village, H village, I town, J town, and K town, in this specific example) are selected (step S 13).

The CPU 31 then performs a specific facility search process. For example, the CPU 31 searches the facility data to detect administrative institution offices (denoted by open circles in Fig. 10) selected as specific facilities located in the selected adjacent cities, towns, and/or villages (step S 14). The CPU 31 then performs a specific facility evaluation process based upon the coordinates of the current position and the coordinates of the respective administrative institution offices in order to calculate the "search cost" of each route from the current position to each of the administrative institution offices (step S 15). Therefore, each administrative institution office is evaluated by using the calculated search cost as an evaluation measure. The CPU 31 reads the search data and determines the respective routes from the current position to each respective administrative institution office. Thereafter, the CPU 31 calculates the cost of each route on the basis of a predetermined cost condition (which is again the distance in the present embodiment), and employs the calculated cost as the "search cost."

Next, the CPU 31 performs a selection process. First, the CPU 31 determines whether the number of adjacent cities, towns, and/or villages is equal to or less than, for example, eight (step S16). If the number of adjacent cities, towns, and/or villages is greater than eight (S16 = NO), the CPU 31 selects eight adjacent cities, towns, and/or villages based upon the evaluation scores and sorts the cities, towns and villages according to the order of decreasing evaluation scores, which was obtained in the above-discussed evaluation of the specific facilities, that is, in the order of increasing search costs (in this specific example, B cities, C towns, E cities, F cities, G village, I town, J town, and K town are selected) (step S 17).

Subsequently, the CPU 31 performs a button assignment process as a selection area assignment process. As was explained above with respect to Fig. 8, buttons k11 to k22 are shaped to look similar to telephone push buttons indicating "1" to "9", "*", "0", and "#" and are displayed on the small-area search screen as shown in Fig. 12. Buttons k11 to k19 are assigned as selection areas for selecting cities, towns, and/or villages on the basis of the search cost of the route to each administrative institution office (step S18).

The CPU 31 performs an order determination process in which the eight cities, towns, and/or villages are sorted in the order of increasing search costs as shown in Fig. 11. In this specific example, the eight cities, towns, and villages are sorted into the order of E city, B city, I town, J town, C town, G village, F city, and K town.

Thereafter, the CPU 31 performs a direction calculation process. The direction $\alpha j$ (j = 1, 2,..., 8) from the current position to each administrative institution office is calculated based upon the coordinates of the current position and the coordinates of each administrative institution office. In this process, the direction $\alpha j$ is expressed as an angle measured in the clockwise direction with respect to due north. In this specific example, as shown in Fig. 11, the directions $\alpha j$ of E city, B city, I town, J town, C town, G village, F city and K town are respectively calculated as 182, 1, 260, 87, 70, 340, 300, and 220 (in units of angular degrees).

In the present exemplary embodiment, centrally-located button k15 is assigned to represent the city, town, or village in which the vehicle (i.e., the navigation apparatus 14) is currently located, and the eight surrounding buttons k11 to k14 and k16 to k19 are assigned to represent adjacent cities, towns, and/or villages. Similar to the first embodiment, the eight buttons k11 to k14 and k16 to k19 located around button k15 each have assigned angles $\beta i$ (i = 1, 2,..., 8) 0, 45, 90, 135, 180, 225, 270, and 315 (in units of degrees) indicating the positions of the respective buttons k11 to k14 and k16 to k19 relative to button k15, wherein each direction $\beta j$ is expressed as an angle measured in the clockwise direction with respect to due north.

Furthermore, the CPU 31 performs an assignment process in a manner similar to the above described embodiment. As was discussed above, the cities, towns, and/or villages are sorted in the order of increasing angles $\alpha j$ (j = 1, 2,..., 8) calculated in the angle calculation process (in this specific example, the cities, town, and/or villages are sorted into the order of B city, C town, J town, E city, K town, I town, F city, and G village). The assigned angle $\beta j$ that is closest to the angle $\alpha j$ of each adjacent city, town, or village is selected in the order of increasing search costs starting from a lowest search cost (in this specific example, E city has a lowest search cost). Then, buttons having the closest assigned angles $\beta j$ are assigned to the respective cities, towns and villages. If any assigned angle $\beta j$ has already been used, the same assigned angle $\beta j$ is not used again, and the assigned angle $\beta j$ closest to a next given direction $\alpha j$ is selected from the remaining assigned angles $\beta j$.

Referring to Fig. 13, the angle $\alpha 4$ of E city having the lowest search cost is 182°, the assigned angle $\beta 4$ of 180° is closest to the angle of 182° and button k18 is assigned to represent E city. The angle $\alpha 5$ of K town is 220°, the assigned angle $\beta 5$ of 225° is closest to the angle of 220° and button k17 is assigned to represent K town. The angle $\alpha 6$ of I town is 260°, the assigned angle $\beta 6$ of 270° is closest to the angle of 260° and button k14 is assigned to represent I town.

The angle $\alpha 7$ of F city is 300°, the assigned angle $\beta 7$ of 315° is closest to the angle of 300° and button k11 is assigned to represent F city. The angle $\alpha 8$ of G village is 340°, the assigned angle $\beta 8$ of 0° is closest to the angle of 340° and button k12 is assigned to represent G village.

The angle $\alpha 1$ of B city is 1°, the remaining (previously not selected) assigned angle $\beta 1$ of 45° is closest to the angle of 1° and button k13 is assigned to represent B city. The angle $\alpha 2$ of C town is 70°, the assigned angle $\beta 2$ of 90° is closest to the angle of 70° and button k16 is assigned to represent C town.

The angle $\alpha 3$ of J town is 87°, the remaining (previously not selected) assigned angle $\beta 3$ of 135° is closest to the angle of 87° and button k19 is assigned to represent J town.

When assignment of buttons to the respective cities, towns, and/or villages is completed, the search screen display means forms a small-area search screen on the display 35 as shown in Fig. 12 (step S19).

In this state, the user can select one of the cities, towns, and/or villages whose name is displayed on corresponding buttons k11 to k19, by touching one of buttons k11 to k19 displayed on the search screen. If one of cities, towns, and/or villages is selected, the CPU 31 performs a small-area search process to set the city, town, or village, which was selected in the previous process, as the selected small area. If a remote controller is used as the operation control unit 34 (Fig. 1), one of the cities, towns, and/or villages whose name is displayed on corresponding buttons k11 to k19 can be selected by pressing an arrow key or a numeric key of the remote controller.

As described above, buttons k11 to k19 on the search screen are assigned to cities, towns, and/or villages such that the positional relationship among buttons k11 to k19 is similar to the actual positional relationship between the city, town, or village in which the vehicle is currently located and the adjacent cities, towns, and/or villages. Therefore, the driver can easily recognize the positional relationship between the current position and a location to search. This makes it possible to easily search for a location using an address.

Furthermore, because the buttons k11 to k19 for selecting a city, a town, or a village are laid out on the search screen in a similar manner to the manner in which telephone push buttons are laid out, it becomes possible to easily input commands to the operation control unit 34 via the display 35.

In the exemplary embodiments described above, the "cost" for each route is calculated on the basis of the distance, and the calculated cost is employed as the search cost. Alternatively, the cost may be calculated for each route on the basis of, for example, the road type, the road width, the number of lanes, and/or the number of traffic signals, and such a calculated cost may be employed as the search cost. Naturally, other parameters may be used in addition to or in the alternative of the above-described parameter for determining which adjacent cities will be represented by the buttons on the search screens.

In the embodiments described above, the administrative institution offices of each city, town, or village are evaluated by using the search cost as the evaluation measure, and cities, towns, and villages are sorted in the order of increasing searching cost. Alternatively, instead of the search cost, the distance from the current position to each administrative institution office, the population of each city, town, or village, or the area of each city, town, or village may be employed as the evaluation measure, and cities, towns, and/or villages may be sorted by the evaluation measure.

Furthermore, in the embodiments described above, selection areas fj are formed as a matrix array on the large-area search screen di. Alternatively, the selection areas fj may be formed on the large-area search screen such that they are laid out in a similar manner to the manner in which telephone push buttons are laid out, i.e., similar to the small-area search screen shown in Fig. 7. In this case, for example, selection areas f1 to f9 shown in Fig. 3 are assigned to buttons k1 to k9 shown in Fig. 7.

According to the above description, the plurality of administrative districts located around the current position of the navigation system (e.g., the vehicle) are displayed in the respective selection areas fj on the search screen (display 35). The determination as to which administrative district is displayed in which selection area fj is made on the basis of the direction of each administrative district with respect to the current position. Preferably, the relative positional relationship among the selection areas is similar to the relative positional relationship to the actual positional relationship among the administrative district in which the navigation system is currently located and the administrative districts adjacent to the current position.

In this case, the user to easily recognize the relative locations of adjacent administrative districts with respect to the location of the administrative district in which the current position is located, thereby making it possible for the user to easily search for a place using an address.

While various features of this invention have been described in conjunction with the exemplary embodiments outlined above, various alternatives, modifications, variations and/or improvements of those features may be possible. Accordingly, the exemplary embodiments of the invention, as set forth above, are intended to be illustrative. Various changes may be made without departing from the scope of the invention.

## Claims

**1.** A navigation apparatus (14), comprising:

a current position detector (15) adapted to detect the current position of the navigation apparatus; and
at least one controller (17) adapted to:

identify in which administrative district the navigation apparatus is currently located based upon the detected current position;
search for at least one facility or landmark located in each of a plurality of administrative districts that are substantially adjacent to the administrative district where the navigation apparatus is currently located; and
assign the adjacent administrative districts to a plurality of selection areas (fj) for display on a search screen based on the respective directions from the detected current position to the at least one facility or landmark located in each of the adjacent administrative districts.

**2.** The navigation apparatus (14) of claim 1, wherein the at least one controller (17) is adapted to associate each selection area (fj) with a predefined angle and to assign each of the plurality of adjacent administrative districts to their respective selection areas based on the predefined angles.

**3.** The navigation apparatus (14) of claim 1 or 2, wherein the at least one controller (17) is adapted to select one specific facility or landmark for each adjacent administrative district.

**4.** The navigation apparatus (14) of claim 1 or 2, wherein the at least one controller (17) is adapted to search for the one facility or landmark by selecting each adjacent administrative district and then searching for the selected facility or landmark located in the selected adjacent administrative district.

**5.** The navigation apparatus (14) of any preceding claim, wherein the at least one controller (17) is adapted to evaluate each selected facility or landmark and assign each adjacent administrative districts to the respective selection areas (fj) for display on the search screen based on said evaluation.

**6.** The navigation apparatus (14) of claim 5, wherein the at least one controller (17) is adapted to evaluate each selected facility or landmark based on a search cost of a route from the detected current position to the selected facility or landmark.

**7.** The navigation apparatus (14) of claim 6, wherein the at least one controller (17) is adapted to assign each adjacent administrative district to the respective selection areas (fj) in the order of decreasing search costs, starting with the lowest search cost.

**8.** The navigation apparatus (14) of any preceding claim, further comprising a display (35) in communication with the at least one controller (17), the controller and display being adapted to display the current position and the adjacent administrative districts in the form of a plurality of buttons (k1-k9; k11-k19) on a touch screen, wherein the current position is allocated to one button that is substantially centrally located on the touch screen and the adjacent administrative districts are allocated to the buttons surrounding the centrally located button, such that the positional relationship among the administrative districts, as represented by the buttons on the touch screen, substantially corresponds to the actual physical relationship among the administrative districts.

**9.** A navigation apparatus (14) comprising:

a current position detector (14) adapted to detect the current position of the navigation apparatus;
a display (35) adapted to form a plurality of buttons (k1-k8; k11-k19) in a manner substantially similar to telephone push buttons, and
at least one controller (17) in communication with the current position detector and the display and being adapted to:

identify in which administrative district the navigation apparatus is currently located based upon the detected current position; and
assign the administrative district in which the navigation apparatus is currently located to a substantially centrally located button and assign a plurality of administrative districts, which are substantially adjacent to the administrative district where the navigation apparatus is currently located, to surrounding buttons.

**10.** The navigation apparatus (14) of claim 9, wherein the at least one controller (17) is adapted to assign each adjacent administrative district to respective selection areas (fj) in the order of decreasing search costs, starting with the lowest search cost.

**11.** A method for searching for a location, comprising:

determining a current position using a current position detector (15);
using at least one controller ( 17) to search a database for at least one facility or landmark located in each of a plurality of administrative districts that are substantially adjacent to the administrative district where the current position is located; and
using the at least one controller to assign each of the adjacent administrative districts to respective selection areas (fj) for display on a search screen based on the respective directions from the current position to each of the facilities or landmarks within the adjacent administrative districts.

**12.** The method of claim 11, wherein the assigning step further comprises assigning each of the adjacent administrative districts to the respective selection areas (fj) based on predefined angles associated with the selection areas.

**13.** The method of claim 11 or 12, further comprising selecting a specific facility or landmark within each adjacent administrative district for use in determining the direction from the current position to each adjacent administrative district.

**14.** The method of claim 11 or 12, wherein the searching step further comprises for each adjacent administrative district:

selecting one of the adjacent administrative districts; and
searching for the at least one facility or landmark located in the selected administrative district.

**15.** The method of any one of claims 11-14, wherein the assigning step further comprises evaluating each selected specific facility and assigning each adjacent administrative district to the respective selection areas (fj) for display on the search screen based on the said evaluation.

**16.** The method of claim 15, wherein the evaluating step further comprises evaluating each selected specific facility based on a search cost of a route from the current position to the selected specific facility.

**17.** The method of claim 16, wherein the assigning step further comprises assigning each adjacent administrative district to the respective selection areas (fj) in the order of decreasing search costs, starting with the lowest search cost.

**18.** A computer program comprising code means for performing, when executed by a processor (17), the method of any one of claims 11-17.

FIG. 1

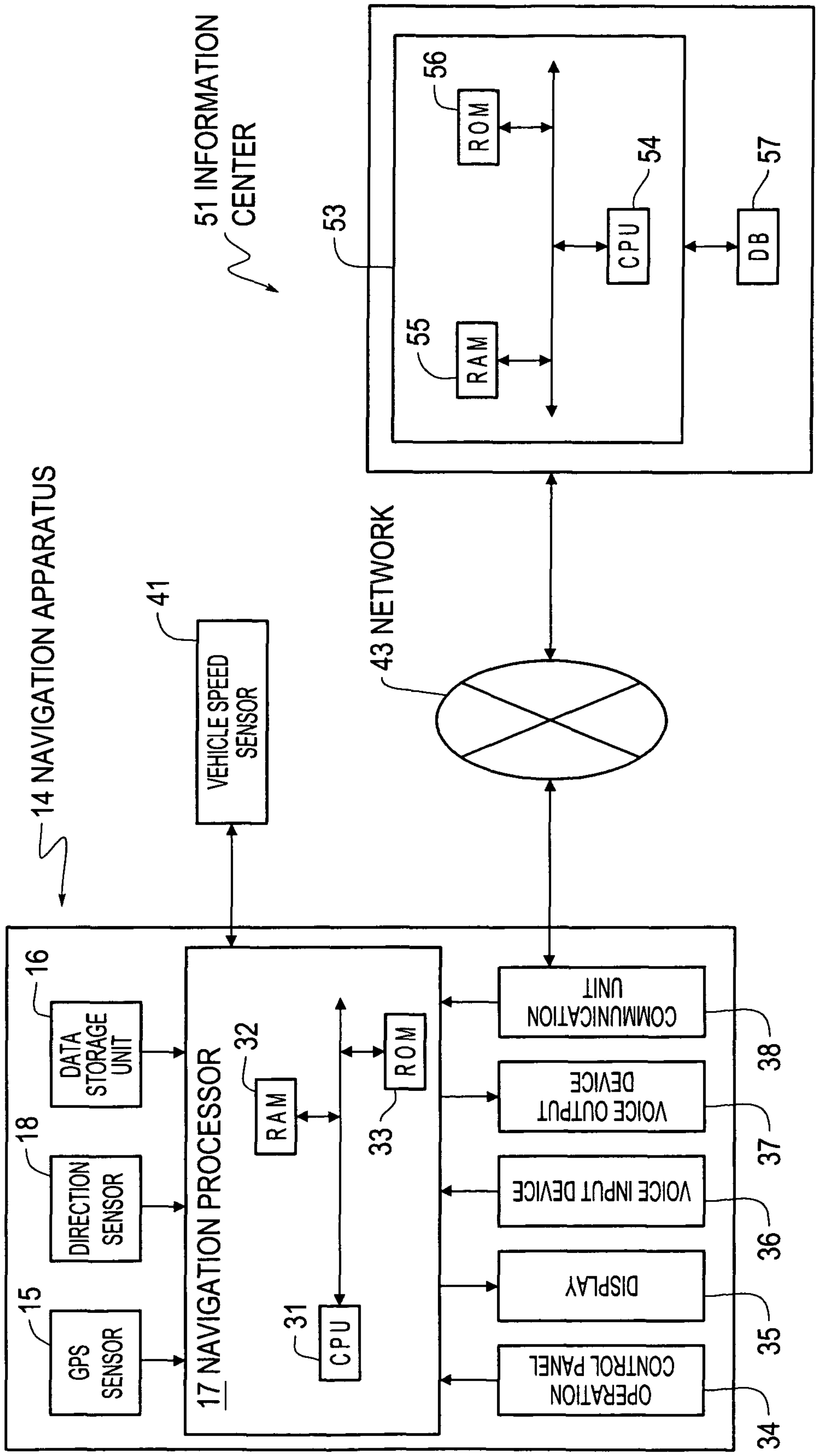
14 NAVIGATION APPARATUS
15
GPS SENSOR
18
DIRECTION SENSOR
16
DATA STORAGE UNIT
17 NAVIGATION PROCESSOR
31
CPU
32
RAM
33
ROM
41
VEHICLE SPEED SENSOR
34
OPERATION CONTROL PANEL
35
DISPLAY
36
VOICE INPUT DEVICE
37
VOICE OUTPUT DEVICE
38
COMMUNICATION UNIT
43 NETWORK
51 INFORMATION CENTER
53
54
CPU
55
RAM
56
ROM
57
DB

FIG. 2

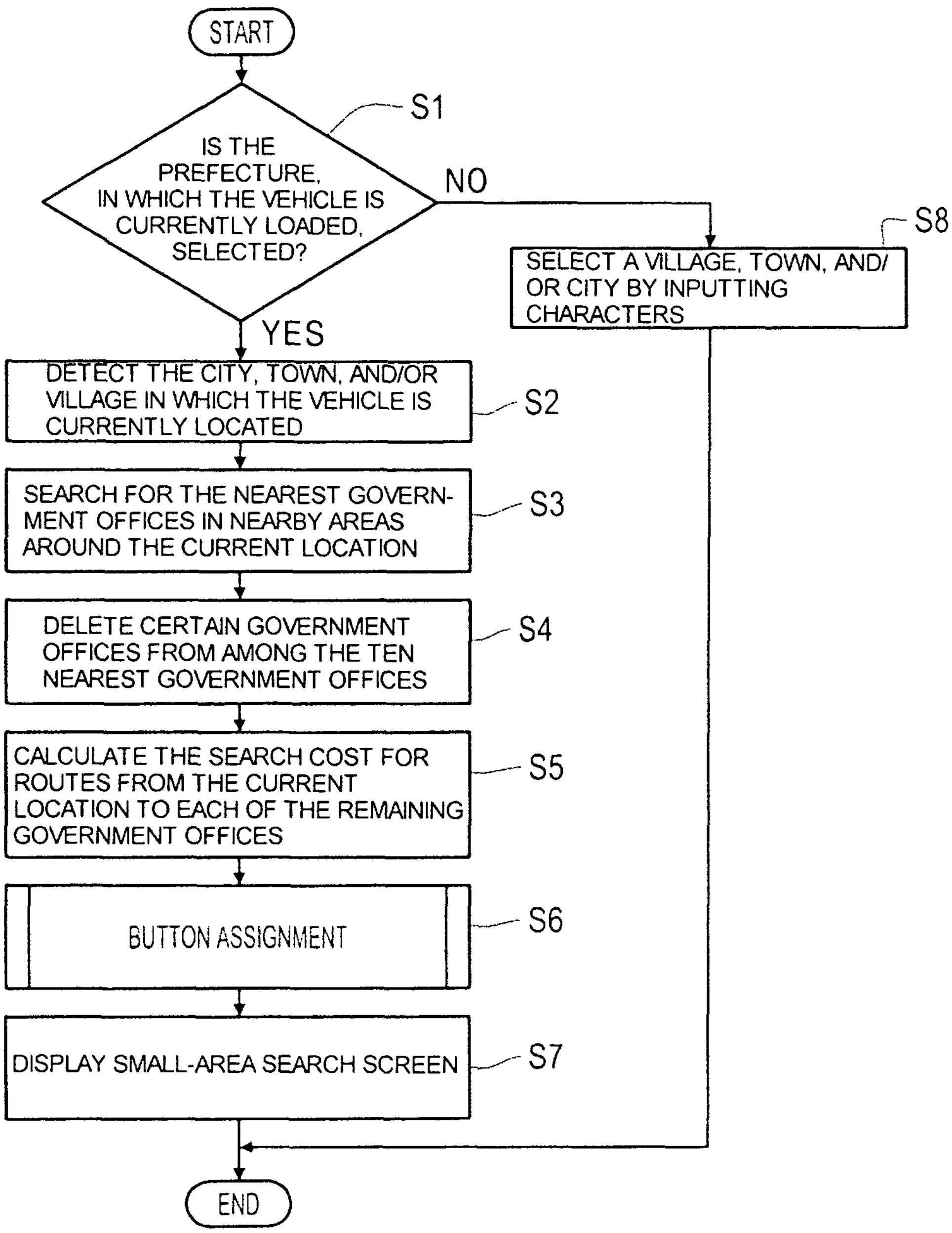
START
IS THE PREFECTURE, IN WHICH THE VEHICLE IS CURRENTLY LOADED, SELECTED?
S1
NO
YES
S8
SELECT A VILLAGE, TOWN, AND/ OR CITY BY INPUTTING CHARACTERS
DETECT THE CITY, TOWN, AND/OR VILLAGE IN WHICH THE VEHICLE IS CURRENTLY LOCATED
S2
SEARCH FOR THE NEAREST GOVERN- MENT OFFICES IN NEARBY AREAS AROUND THE CURRENT LOCATION
S3
DELETE CERTAIN GOVERNMENT OFFICES FROM AMONG THE TEN NEAREST GOVERNMENT OFFICES
S4
CALCULATE THE SEARCH COST FOR ROUTES FROM THE CURRENT LOCATION TO EACH OF THE REMAINING GOVERNMENT OFFICES
S5
BUTTON ASSIGNMENT
S6
DISPLAY SMALL-AREA SEARCH SCREEN
S7
END

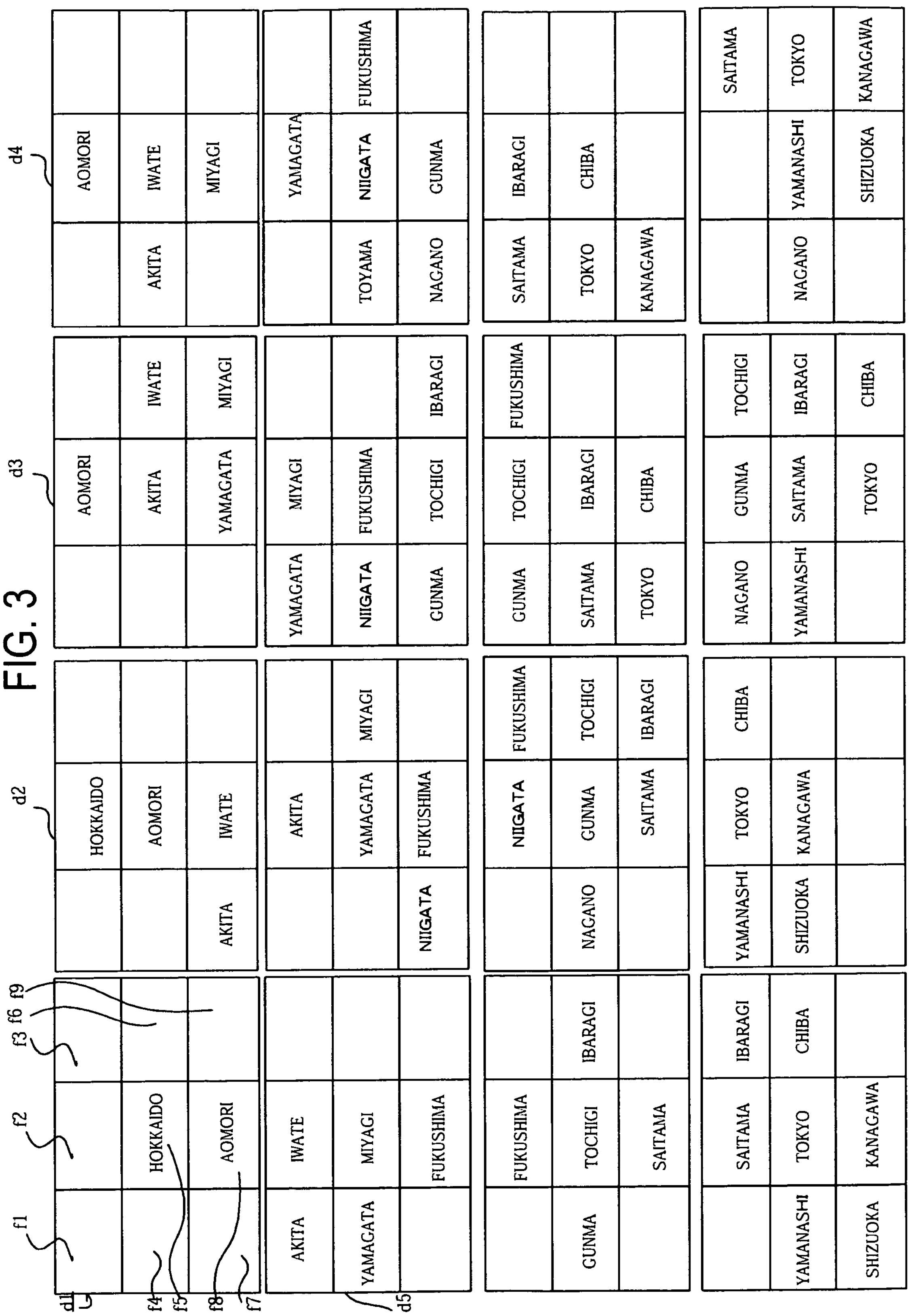
d1
d2
d3
d4
d5
f1
f2
f3
f4
f5
f6
f7
f8
f9
HOKKAIDO
AOMORI
AKITA
IWATE
YAMAGATA
MIYAGI
FUKUSHIMA
GUNMA
TOCHIGI
IBARAGI
SAITAMA
YAMANASHI
TOKYO
CHIBA
SHIZUOKA
KANAGAWA
NIIGATA
NAGANO
TOYAMA

FIG. 3

# FIG. 4

d17

| | | |
|---|---|---|
| TOYAMA | NIIGATA | GUNMA |
| GIFU | NAGANO | SAITAMA |
| AICHI | SHIZUOKA | YAMANASHI |

| | | |
|---|---|---|
| NAGANO | YAMANASHI | TOKYO |
| AICHI | SHIZUOKA | KANAGAWA |
| | | |

| | | |
|---|---|---|
| SHIGA | GIFU | NAGANO |
| MIE | AICHI | SHIZUOKA |
| | | |

| | | |
|---|---|---|
| FUKUI | ISHIKAWA | TOYAMA |
| SHIGA | GIFU | NAGANO |
| MIE | AICHI | |

| | | |
|---|---|---|
| | ISHIKAWA | TOYAMA |
| KYOTO | FUKUI | GIFU |
| | SHIGA | |

| | | |
|---|---|---|
| | | |
| FUKUI | ISHIKAWA | TOYAMA |
| | GIFU | |

| | | |
|---|---|---|
| | | |
| ISHIKAWA | TOYAMA | NIIGATA |
| FUKUI | GIFU | NAGANO |

| | | |
|---|---|---|
| KYOTO | SHIGA | GIFU |
| NARA | MIE | AICHI |
| WAKAYAMA | | |

| | | |
|---|---|---|
| | FUKUI | |
| KYOTO | SHIGA | GIFU |
| NARA | MIE | AICHI |

| | | |
|---|---|---|
| | | FUKUI |
| HYOGO | KYOTO | SHIGA |
| OSAKA | NARA | MIE |

| | | |
|---|---|---|
| HYOGO | KYOTO | SHIGA |
| OSAKA | NARA | MIE |
| WAKAYAMA | | |

| | | |
|---|---|---|
| HYOGO | OSAKA | NARA |
| | WAKAYAMA | MIE |
| TOKUSHIMA | | |

| | | |
|---|---|---|
| HYOGO | KYOTO | SHIGA |
| | OSAKA | NARA |
| TOKUSHIMA | WAKAYAMA | |

| | | |
|---|---|---|
| TOTTORI | | KYOTO |
| OKAYAMA | HYOGO | OSAKA |
| KAGAWA | TOKUSHIMA | WAKAYAMA |

| | | |
|---|---|---|
| | | |
| SHIMANE | TOTTORI | HYOGO |
| HIROSHIMA | OKAYAMA | |

| | | |
|---|---|---|
| | | |
| YAMAGUCHI | SHIMANE | TOTTORI |
| | HIROSHIMA | OKAYAMA |

FIG. 5

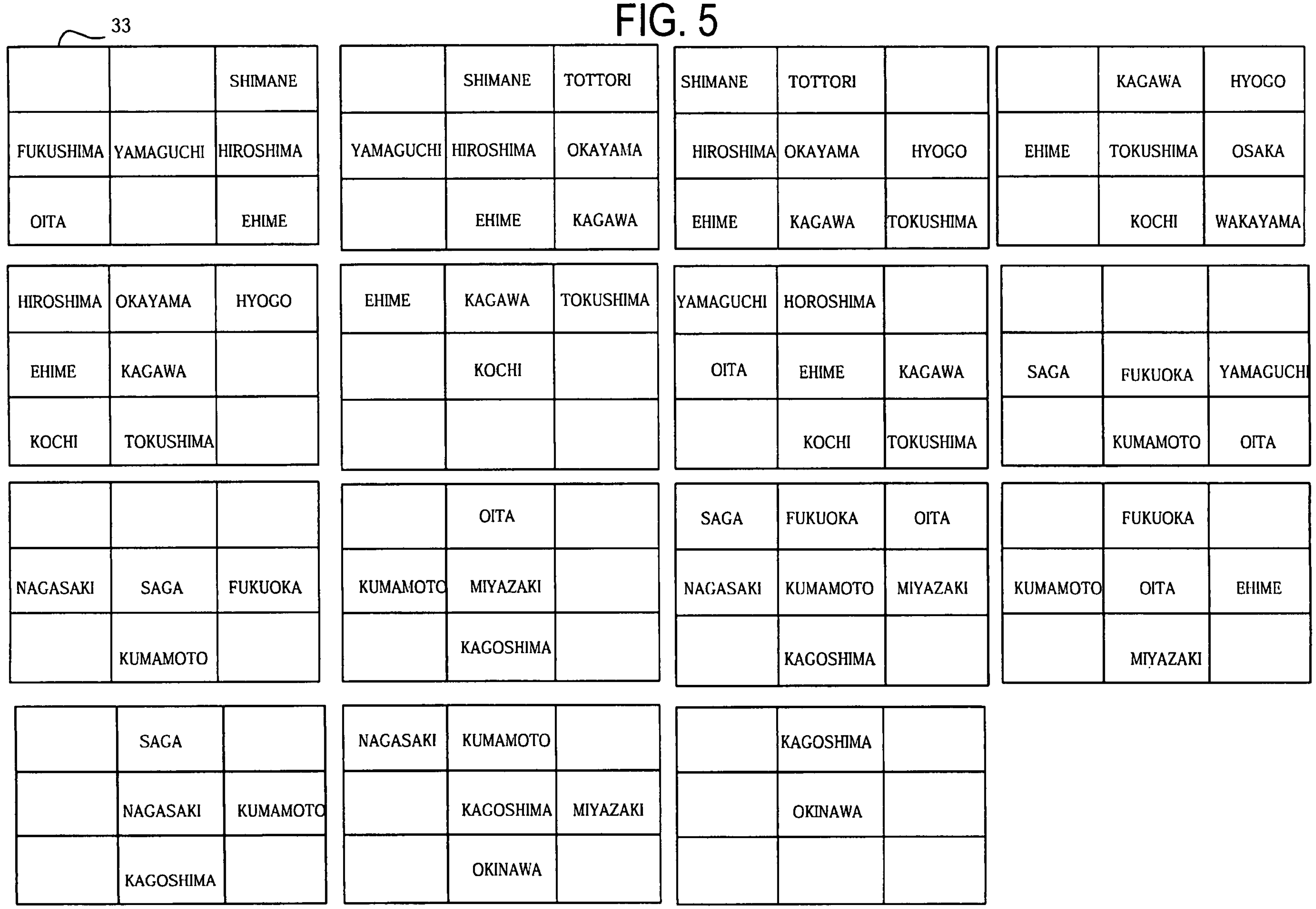
33
SHIMANE
FUKUSHIMA
YAMAGUCHI
HIROSHIMA
OITA
EHIME
SHIMANE
TOTTORI
YAMAGUCHI
HIROSHIMA
OKAYAMA
EHIME
KAGAWA
SHIMANE
TOTTORI
HIROSHIMA
OKAYAMA
HYOGO
EHIME
KAGAWA
TOKUSHIMA
KAGAWA
HYOGO
EHIME
TOKUSHIMA
OSAKA
KOCHI
WAKAYAMA
HIROSHIMA
OKAYAMA
HYOGO
EHIME
KAGAWA
KOCHI
TOKUSHIMA
EHIME
KAGAWA
TOKUSHIMA
KOCHI
YAMAGUCHI
HOROSHIMA
OITA
EHIME
KAGAWA
KOCHI
TOKUSHIMA
SAGA
FUKUOKA
YAMAGUCHI
KUMAMOTO
OITA
NAGASAKI
SAGA
FUKUOKA
KUMAMOTO
OITA
KUMAMOTO
MIYAZAKI
KAGOSHIMA
SAGA
FUKUOKA
OITA
NAGASAKI
KUMAMOTO
MIYAZAKI
KAGOSHIMA
FUKUOKA
KUMAMOTO
OITA
EHIME
MIYAZAKI
SAGA
NAGASAKI
KUMAMOTO
KAGOSHIMA
NAGASAKI
KUMAMOTO
KAGOSHIMA
MIYAZAKI
OKINAWA
KAGOSHIMA
OKINAWA

FIG. 6

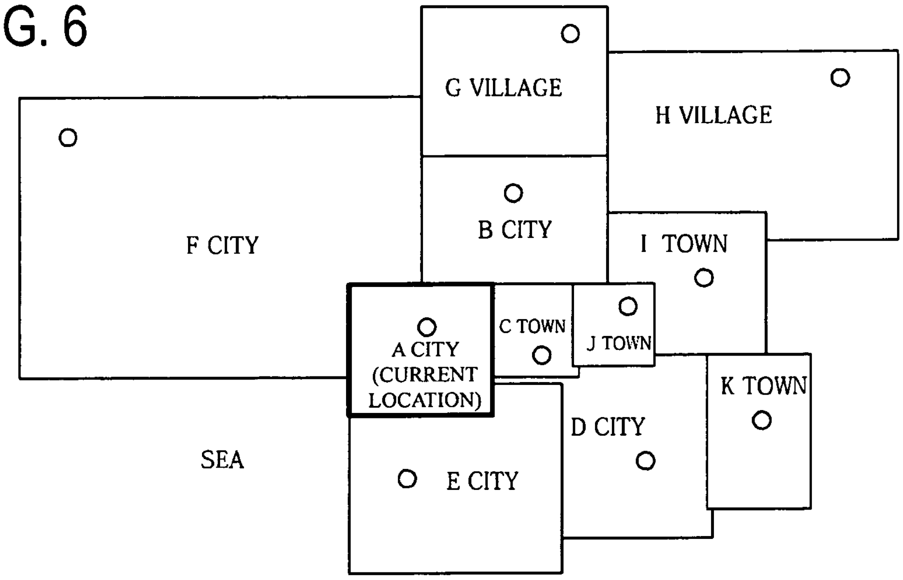
G VILLAGE
H VILLAGE
F CITY
B CITY
I TOWN
C TOWN
J TOWN
A CITY
(CURRENT
LOCATION)
K TOWN
D CITY
SEA
E CITY

FIG. 7

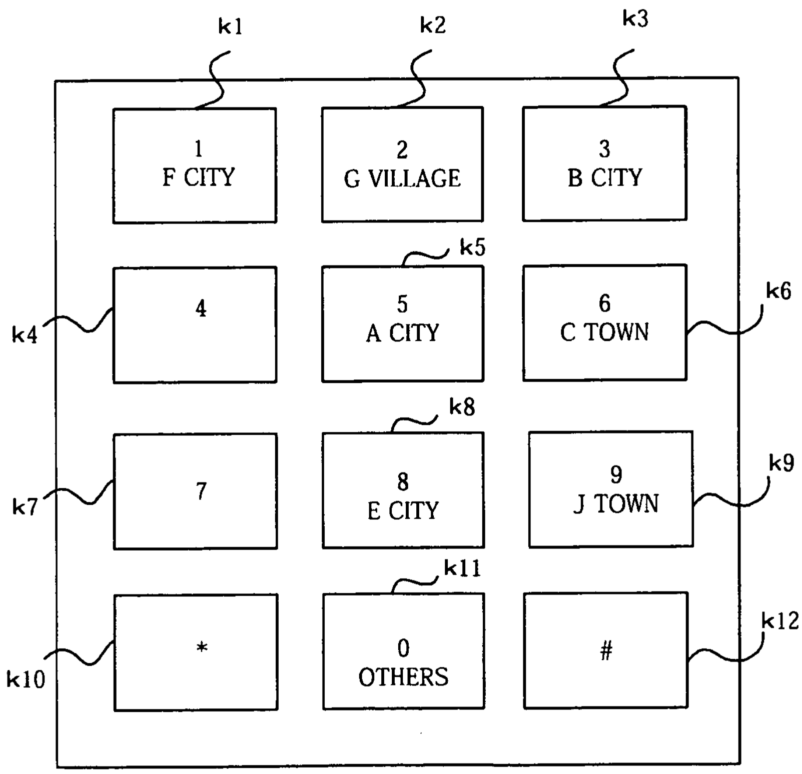
k1
k2
k3
1
F CITY
2
G VILLAGE
3
B CITY
k5
k4
4
5
A CITY
6
C TOWN
k6
k8
k7
7
8
E CITY
9
J TOWN
k9
k11
k10
*
0
OTHERS
#
k12

FIG. 8

| PRIORITY ORDER | CITY, TOWN, OR VILLAGE | DIRECTION | ASSIGNED ANGLE |
|---|---|---|---|
| 1 | E CITY | 182° | 180° |
| 2 | C TOWN | 91° | 90° |
| 3 | B CITY | 43° | 45° |
| 4 | J TOWN | 87° | 135° |
| 5 | D CITY | 130° | ~~225°~~ |
| 6 | G VILLAGE | 30° | 0° |
| 7 | F CITY | 300° | 315° |
| 8 | I TOWN | 88° | ~~225°~~ |
| 9 | K TOWN | 120° | ~~225°~~ |
| 10 | H VILLAGE | 58° | ~~270°~~ |

FIG. 9

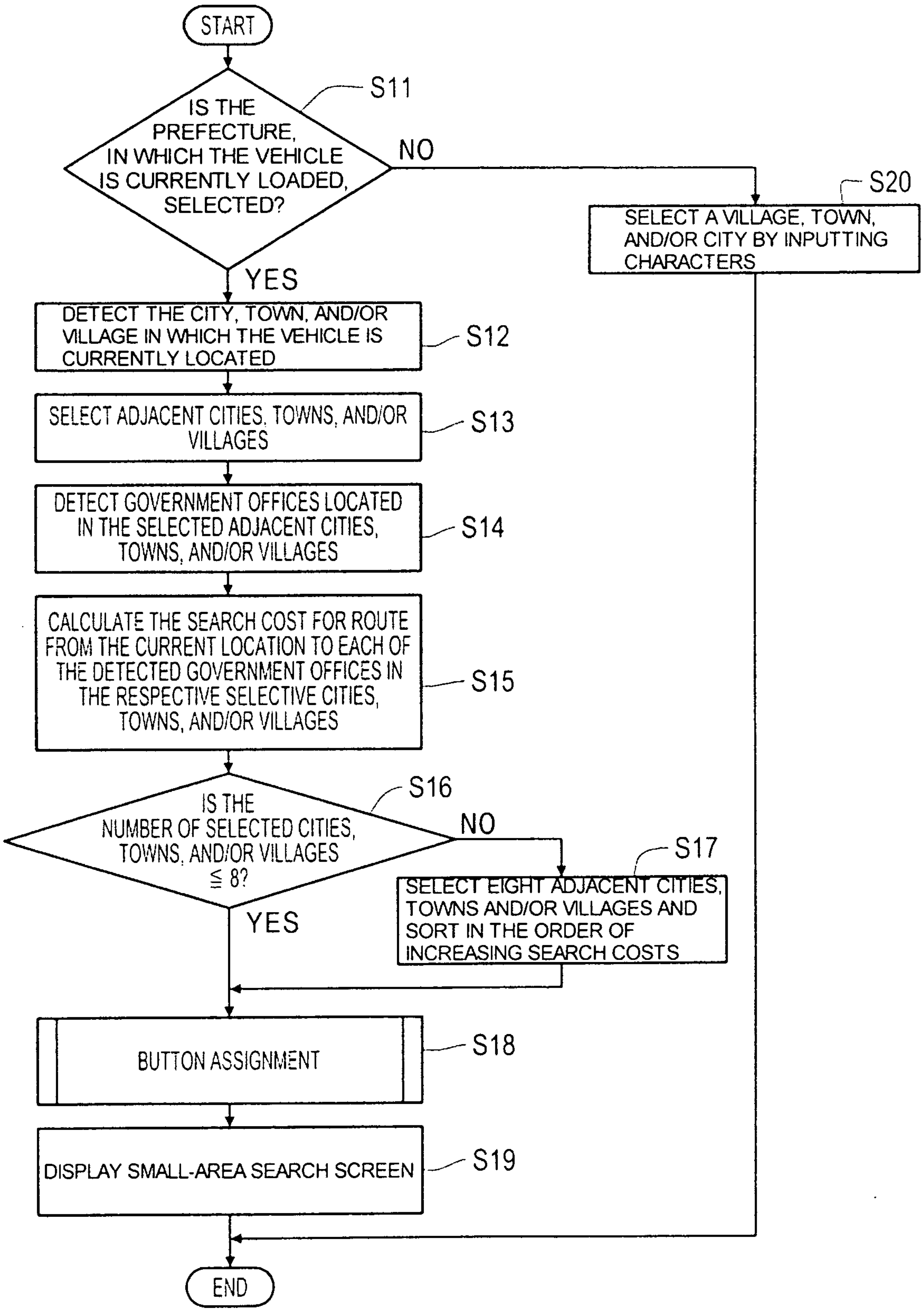
START
IS THE PREFECTURE, IN WHICH THE VEHICLE IS CURRENTLY LOADED, SELECTED?
S11
NO
YES
S20
SELECT A VILLAGE, TOWN, AND/OR CITY BY INPUTTING CHARACTERS
DETECT THE CITY, TOWN, AND/OR VILLAGE IN WHICH THE VEHICLE IS CURRENTLY LOCATED
S12
SELECT ADJACENT CITIES, TOWNS, AND/OR VILLAGES
S13
DETECT GOVERNMENT OFFICES LOCATED IN THE SELECTED ADJACENT CITIES, TOWNS, AND/OR VILLAGES
S14
CALCULATE THE SEARCH COST FOR ROUTE FROM THE CURRENT LOCATION TO EACH OF THE DETECTED GOVERNMENT OFFICES IN THE RESPECTIVE SELECTIVE CITIES, TOWNS, AND/OR VILLAGES
S15
IS THE NUMBER OF SELECTED CITIES, TOWNS, AND/OR VILLAGES ≦ 8?
S16
NO
YES
S17
SELECT EIGHT ADJACENT CITIES, TOWNS AND/OR VILLAGES AND SORT IN THE ORDER OF INCREASING SEARCH COSTS
BUTTON ASSIGNMENT
S18
DISPLAY SMALL-AREA SEARCH SCREEN
S19
END

FIG. 10

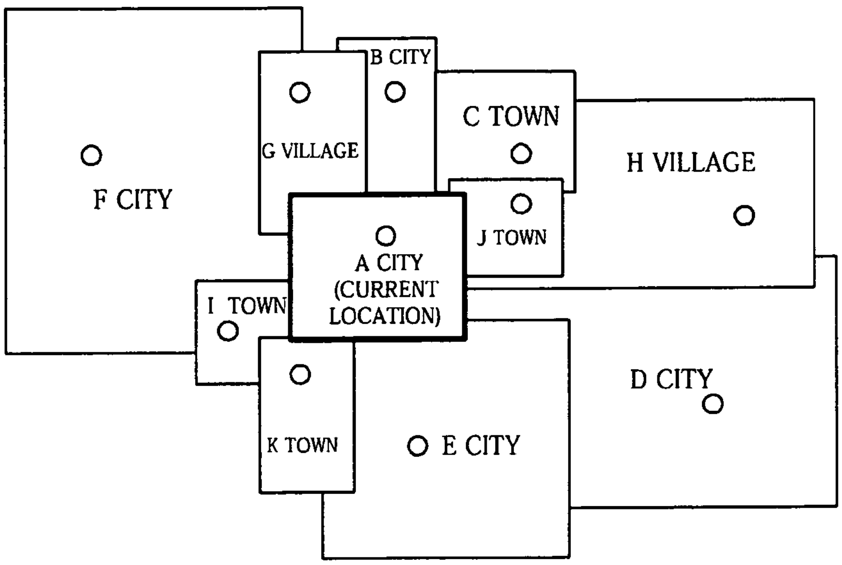


FIG. 11

| PRIORITY ORDER | CITY, TOWN, OR VILLAGE | DIRECTION |
|---|---|---|
| 1 | E CITY | 182° |
| 2 | B CITY | 1° |
| 3 | I TOWN | 260° |
| 4 | J TOWN | 87° |
| 5 | C TOWN | 70° |
| 6 | G VILLAGE | 340° |
| 7 | F CITY | 300° |
| 8 | K TOWN | 220° |

FIG. 12

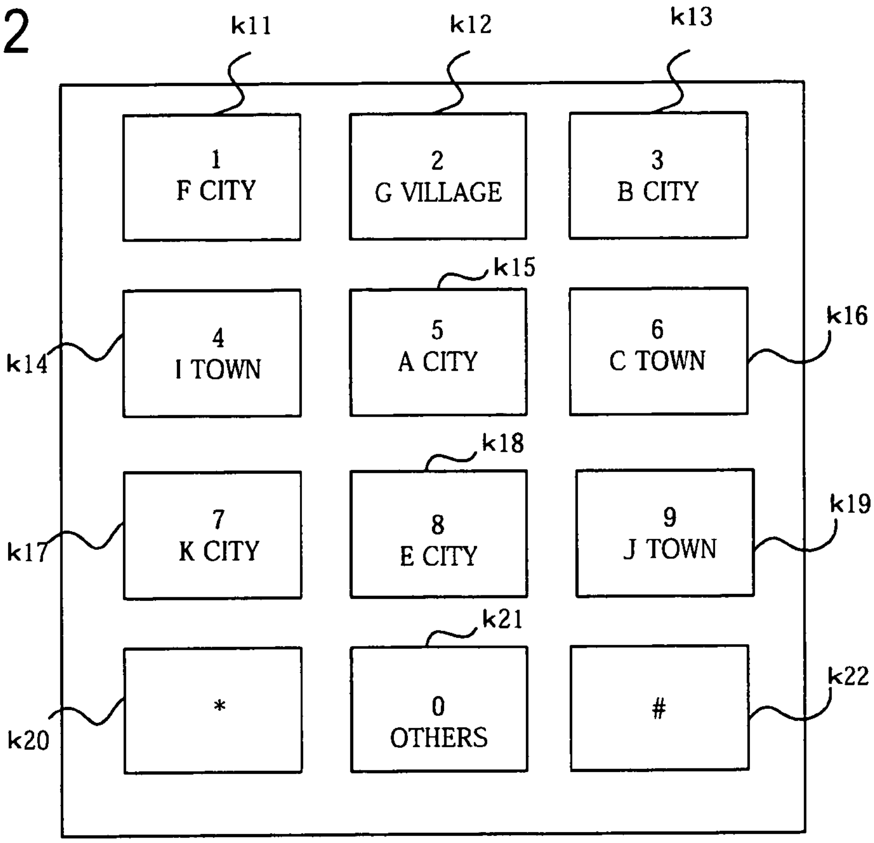


FIG. 13

| CITY, TOWN, OR VILLAGE | DIRECTION | ASSIGNED ANGLE |
|---|---|---|
| B CITY | 1° | 45° |
| C TOWN | 70° | 90° |
| J TOWN | 87° | 135° |
| E CITY | 182° | 180° |
| K TOWN | 220° | 225° |
| I TOWN | 260° | 270° |
| F CITY | 300° | 315° |
| G VILLAGE | 340° | 0° |